# EUROPEAN PATENT APPLICATION

(11) **EP 3 726 321 A1**
(43) Date of publication of application: **21.10.2020**
(21) Application number: 19169531.1
(22) Date of filing: 16.04.2019
(51) Int. Cl.: G05B 23/02

(54) **A METHOD TO COLLECT LABELS FOR SEMI-SUPERVISED MACHINE LEARNING ALGORITHMS USING NATURAL LANGUAGE AND DEBUG / ONLINE MODE OF PLC ENGINEERING SOFTWARE**

(71) Applicant: Siemens Aktiengesellschaft, 80333 München (DE)
(72) Inventor: Milovanovic, Igor, 90491 Nürnberg (DE); Hofmann, Klaus-Peter, 91086 Aurachtal-Münchaurach (DE); Kiss, Monika, 90491 Nürnberg (DE)

(57) **Abstract**

The present invention relates to a computer-implemented method of annotating monitoring data and a corresponding engineering tool. Historical data of an industrial system collected in an online / debug mode of the engineering tool is annotated in natural language by a domain-expert in the online / debug mode of the engineering tool.

## Description

A Method to collect labels for semi-supervised machine learning algorithms using natural language and debug / online mode of PLC engineering software

The present invention relates to a computer-implemented method of annotating monitoring data and a corresponding engineering tool as well as a data carrier and a computer system.

Industrial Internet of Things (IoT) platforms are capable of collecting vast amounts of data from industrial devices like programmable logic controllers (PLCs). This data can be used for different applications and tasks like machine learning algorithms for e.g. anomaly detection, predictive maintenance etc.

In unsupervised learning algorithms said data can be easily used. However, as the data is usually obtained during normal operation of an industrial system (e.g. an industrial automation system), it is quite difficult to collect labelled data, which is data extended with meta-data containing a description of the state the respective system at a time when the data was collected (e.g. error descriptions), for (semi-)supervised learning algorithms. These labels in natural language (e.g. machine is not behaving properly, high vibration in the system etc.) can be collected manually in cooperation between the engineer and data scientist. However, this process is cumbersome, tedious and error prone and requires extensive coordination and synchronization. The labels (for (semi-)supervised learning algorithms) are mostly provided with help of domain experts (engineers, technicians, service staff etc.) which can examine automatically stored historical data of the industrial system or single devices of such industrial system and provide labels such that the historical data can be used in (semi-)automatic learning algorithms. For example a domain expert can provide a description of the state of a device (e.g. pump) of an industrial system in natural language (e.g. "malfunctioning pump, no flow") and add this label to automatically stored historical data of the respective device (e.g. profile of current of the motor of the pump over time and optionally a profile of the flow through the pump over time and/or a pressure profile at the input / output of the pump over time and/or a profile of the temperature in / of the pump over time). The provided labels in natural language can be automatically processed such that the labels can be used in machine learning.

It is an objective of the present invention to solve or at least alleviate above stated problems and to provide simplified annotating of historical data from an industrial system, in particular an industrial IoT platform.

Therefore, the present invention provides a computer-implemented method of annotating monitoring data according to independent claim 1 and an engineering tool as well as a data carrier and a computer system according to the further independent claims. Embodiments and refinements of the present invention are subject of the respective dependent claims.

According to a first aspect of the present invention a computer-implemented method of annotating monitoring data, comprises the following steps:
- Collecting values of at least one physical quantity of an industrial system describing a current state of the industrial system as historical data in a debug / online mode of an engineering tool.
- Annotating the historical data by a domain-expert producing annotated data. Thereby, labels in natural language are provided as meta-data to the historical data in the debug / online mode of the engineering tool.

According to a second aspect of the present invention an engineering tool is arranged and configured to implement the steps of the computer-implemented method of the first aspect of the present invention. The engineering tool comprises a data collecting feature and an annotating feature. The data collecting feature is arranged and configured to implement the step of collecting of the computer-implemented method according to the first aspect of the present invention. The annotating feature is arranged and configured to implement the step of annotating of the computer-implemented method according to the first aspect of the present invention.

According to a third aspect of the present invention a data carrier is arranged and configured to store the engineering tool according to the second aspect of the present invention.

According to a fourth aspect of the present invention a computer system is arranged and configured to execute the steps of the computer-implemented method according to the first aspect of the present invention.

The industrial system may be a manufacturing plant, an automation system, a production lane and the like. In particular, the industrial system may be an Industrial Internet of Things (IIoT) platform. The industrial system can comprise at least one device like a manufacturing device, a generator, a robot and the like. The industrial system may comprise at least one sensor (e.g. current/voltage sensor, acceleration sensor, pi-ezo-element based sensor, flow rate sensor, etc.), for monitoring the at least one physical quantity. The at least one physical quantity may be any physical quantity of the device(s) of the industrial system like current (e.g. current of an electrical motor of a pump), voltage, impedance, angle, rotational speed (e.g. of a pump), torque, orientation, position, velocity, acceleration, force, flow (e.g. through a pump), pressure (e.g. at the input/output of a pump), temperature (e.g. in / of a pump) etc. The sensors may provide the values of the at least one monitored physical quantity as monitoring data.

In the step of collecting, the values of the at least one physical quantity (e.g. of a device of the industrial system) may be received from at least one sensor of the industrial system (e.g. monitoring a physical quantity of the device) as monitoring data. The values of the at least one physical quantity are indicative of the current state of the industrial system or rather of its device(s).

The values of the at least one physical quantity (monitoring data) are collected with the engineering tool in the online / debug mode as the historical data. The online / debug mode of the engineering tool may be a mode for monitoring an alternatively or additionally assessing correct functioning of the industrial system. The engineering tool may commonly be used by a domain expert like an engineer (developing or monitoring the industrial system), a technician, service personnel etc. The historical data may comprise a profile of a current (e.g. of the motor of the pump over time and optionally a profile of the values of the at least one physical quantity over time (e.g. a profile of the flow through a pump over time and/or a pressure profile at the input / output of the pump over time and/or a profile of the temperature in / of the pump over time etc.).

In the step of annotating the domain-expert, while monitoring / assessing correct operation of the industrial system based on the historical data labels the historical data with meta-data. The meta-data contains natural language descriptions of the state of the industrial system at the time the respective historical data (values of the at least one physical quantity) was collected or rather monitored. For example the meta-data may contain a description like "normal operation" in case the historical data indicates that the industrial system was in a state of normal operation. Further, the meta-data may contain a description of errors / failures in the industrial system or rather of the device(s) of the industrial system. Further, the historical data (monitoring data) and the annotated data may comprise timestamps of the time point at which the respective value of the at least one physical quantity was monitored (by the respective sensor). Thus, the annotated data comprising the historical data with meta-data and optionally the timestamps contains information about the physical state (e.g. value of the at least one physical quantity) and the corresponding operational state (e.g. normal operation or error/failure) of the industrial system (at a certain time point).

The annotated data may be used, after pre-processing, for (semi-)supervised learning / training algorithms for artificial intelligence systems like neuronal networks.

The collecting and annotating of values of physical quantities of (devices of) industrial systems in the online / debug mode of the engineering tool enables simplified and fast annotating of historical data received from an industrial system (IIoT platform).

According to a refinement of the present invention the steps are executed during an engineering phase of the industrial system.

During the engineering phase of the industrial system the domain expert (e.g. development engineer) assesses correct operation of the industrial system in the online / debug mode of the engineering tool. Thereby, the domain-expert can annotate the historical data directly during engineering of the industrial system.

Consequently, the industrial system can be taken into productive operation including a working automatic error /failure detection system with an artificial intelligence system (neuronal network) for recognizing the current (error/failure) state of the industrial system. The artificial intelligence system / neuronal network is completely trained based on the annotated data generated during the engineering phase.

According to a refinement of the present invention the steps are alternatively or additionally executed during operation of the industrial system.

During (productive) operation of the industrial system the domain-expert may monitor the state of the industrial system. While the values of the at least one physical quantity are collected the domain-expert can assess the state of the (at least one device of the) industrial system and at the same time annotate the collected historical data with labels as meta-data containing natural descriptions of the respective state the (at least one device of the) industrial system was in while the historical data / monitoring data was collected or rather monitored (by the at least one sensor).

Thus, a database of known states and in particular of known errors / failures can be extended with new / up to then unknown errors /failures or rather annotated data of the latter. This enables more diverse and precise error prediction by artificial intelligence systems / neuronal networks trained based on this extended database.

According to a refinement of the present invention the values of the at least one physical quantity are collected from a simulation model of the industrial system.

During the engineering phase of a (planned) industrial system as well as during (productive) operation of an (existing) industrial system the industrial system or rather its at least one device may be modelled resulting in a simulation model / digital twin of the industrial system. A simulation of the operation of the industrial system may be executed based on its simulation model / digital twin. Different states of the industrial system or rather of its at least one device (e.g. normal operation as well as specific errors / failures) can be simulated with the simulation model / digital twin of the industrial system. During this simulation the (simulated) values of the at least one physical quantity are collected as (virtual) historical data.

The database of annotated data for (semi-)supervised learning algorithms can be established even before a test phase of the (real) industrial system during the engineering phase or parallel to normal (productive) operation of the (real) industrial system. Thus, the artificial intelligence system / neuronal network may already be tested or refined / fine tuned during the test phase of the (real) industrial system or it may be provided for an existing industrial system without having to stop productive operation for collecting monitoring data / historical data in different states.

According to a refinement of the present invention after the step of collecting the computer-implemented method further comprises the step:
- Defining portions of interest of the historical data to be annotated in the debug / online mode of the engineering tool.

Subsequently, in the step of annotating only the portions of interest are labelled by the domain-expert.

According to a further refinement of the present invention the annotating feature is further arranged and configured to implement the step of defining.

Only relevant portions of the profile(s) over time of the values of the at least one physical quantity (e.g. the portion of the profile during an error / failure) are defined as portions of interest and collected as historical data as well as subsequently annotated by the domain-expert in the online / debug mode of the engineering tool.

The defining of portions of interest minimizes the amount of data and time consumed for annotating.

According to a refinement of the present invention the computer-implemented method further comprises the step:
- Sending the annotated data to an Internet of Things (IoT) platform and additionally or alternatively to a cloud system for storage.

According to a further refinement of the present invention the engineering tool is arranged and configured to further implement the step of sending. The engineering tool comprises a data communication feature. The communication feature is arranged and configured to implement the step of sending.

The annotated data is transmitted to an IoT platform and/or a cloud system where large amounts of data from the industrial system can be collected and stored. The annotated data can be stored in a repository of the IoT platform / cloud system and downloaded for (semi-)supervised learning algorithms.

This provides for a very diverse and highly available repository for learning algorithms.

According to a refinement of the present invention the computer-implemented method further comprises the step:
- Uploading the annotated data to a configured customer tenant of the IoT platform.

According to a further refinement of the present invention the engineering tool is arranged and configured to further implement the step of uploading to a customer tenant. The communication feature is arranged and configured to implement the step of uploading to a customer tenant.

By directly providing the annotated data to a customer tenant, the error detection for an existing industrial system can be updated by learning / training the respective artificial intelligence system / neuronal network based on the latest annotated data.

This enables always correct detection of newly discovered (error / failure) states of the industrial system.

According to a refinement of the present invention the computer-implemented method further comprises the step:
- Uploading anonymized annotated data to a data lake of the IoT platform.

According to a further refinement of the present invention the engineering tool is arranged and configured to further implement the step of uploading to a data lake or data repository. The communication feature is arranged and configured to implement the step of uploading to a data lake.

By uploading anonymized annotated data to the data lake, new information about states of the industrial system can be provided by different customers operating equivalent industrial systems without the source (e.g. respective customer) being recognizable.

Consequently, many different sources for annotated data can be combined and the quality of the learning / training of the artificial intelligence system / neuronal network can be increased.

According to a refinement of the present invention the IoT platform is an Industrial Internet of Things (IIoT) platform.

According to a refinement of the present invention the engineering tool is an engineering tool for programmable logic controllers PLCs.

The present invention is subsequently further described by means of embodiments of the different aspects. These embodiments are only for better understanding of the subject-matter of the present invention and not to be construed as limiting to the scope of the present invention.
- Fig. 1: shows a schematic flow chart of the computer-implemented method of annotating monitoring data of the first aspect of the present invention.
- Fig. 2: shows a schematic view of an engineering tool of the second aspect of the present invention.
- Fig. 3: shows a schematic view of a data carrier of the third aspect of the present invention.
- Fig. 4: shows a schematic view of a computer system of the fourth aspect of the present invention.

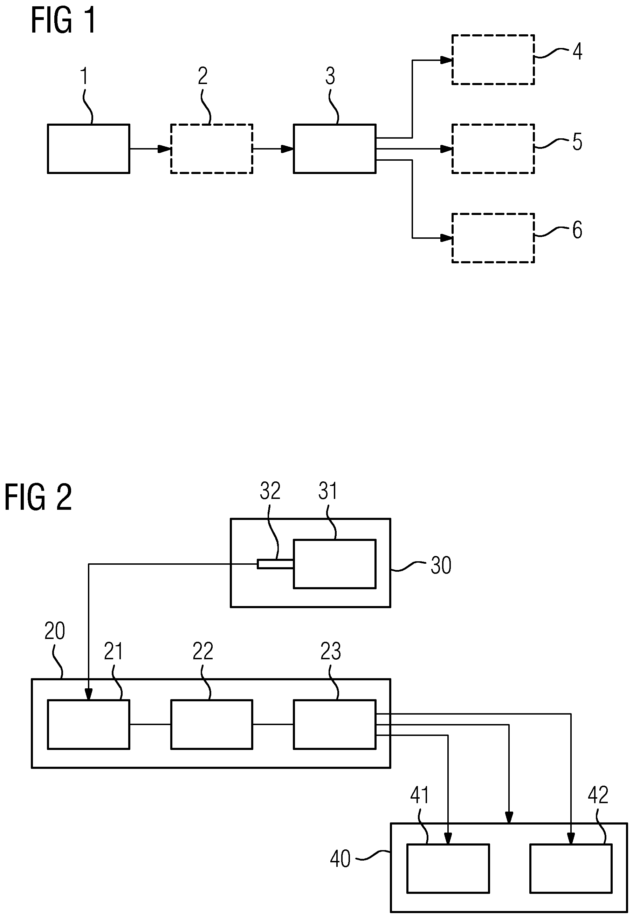

In Fig. 1 the computer-implemented method of annotating monitoring data is schematically depicted. The computer-implemented method comprises the steps of collecting 1 and annotating 3 as well as optionally at least one of the steps of defining 2, sending 4, uploading 5 to a customer tenant and uploading 6 data to a data lake.

In the step of collecting 1 monitoring data of an industrial system like a manufacturing plant is collected as historical data in an online /debug mode of an engineering tool. The historical (monitoring) data comprises values or rather a profile over time of values of at least one physical quantity (e.g. flow) of the industrial system or of one of its devices (e.g. of a pump). The monitoring data is generated by at least one sensor (e.g. flow rate sensor) monitoring the industrial system or rather at least one of its devices.

In the optional step of defining 2 portions of interest of the historical data are defined in the online / debug mode of the engineering tool. A portion of interest may be a portion of the profile over time of the values of the at least one physical quantity during which a certain state of the industrial system or of one of its devices, respectively, was present (e.g. an error).

In the step of annotating 3 the historical data or rather the defined portions of the historical data are annotated by a domain expert (e.g. a development engineer) in the online debug mode of the engineering tool. The domain-expert labels the (portions of the) historical data with meta-data containing descriptions in natural language of the respective state the industrial system / device was in (e.g. "error in pump, no flow") while the corresponding historical data (monitoring data) was generated.

In the optional step of sending 4 the annotated data is sent to an Industrial Internet of Things (IIoT) platform or a cloud system for storage. The data can be fetched from the IIoT platform or cloud system for utilization in an (semi-)supervised learning algorithm for learning / training an artificial intelligence system /neuronal network for automatically identifying and/or predicting errors of the industrial system.

In the optional step of uploading 5 the annotated data is uploaded to a configured customer tenant of the IIoT platform (e.g. a company using the industrial system). The customer tenant has always access to the latest annotated data for learning / training the artificial intelligence system / neuronal network for the industrial system.

In the optional step of uploading 6 the annotated data is uploaded to a data lake or repository of the IIoT platform. Users of the industrial system can upload and fetch the latest annotated data on their own.

In Fig. 2 an engineering tool 20 is schematically depicted. The engineering tool 20 implements the computer-implemented method of Fig. 1 and comprises a data collecting feature 21 and an annotating feature 22 as well as optionally a communication feature 23. The features can be implemented by software components. The engineering tool 20 is communicatively connected to the industrial system 30 comprising the at least one device 31 and the at least one sensor 32 monitoring the at least one device 31. Further, the engineering tool 20 is optionally communicatively connected to the IIoT platform 40 having the at least one configured customer tenant 41 and comprising a data lake 42.

The data collecting feature 21 implements the step of collecting 1 monitoring data / online mode. The monitoring data generated by at least one sensor 32 while monitoring the device 31 are collected by the collecting feature 21 as historical data. The historical data (monitoring data) comprises the (at least one profile of) values of the at least one physical quantity of the device 31.

The annotating feature 22 implements the step of annotating 3 the historical data and optionally the step of defining 2 portions of interest in the debug / online mode. First there may be defined portions of interest in the historical data. Such portions of interest correspond to time points or time periods where a specific state of the industrial system or rather of the monitored device was present (e.g. error of the pump). The (portions of the) historical data are annotated by the domain-expert in natural language. The resulting annotated data comprises the (portions of the) historical data and meta-data containing the description of the state of the industrial system / device was in.

The optional communication feature 23 implements at least one of the steps of sending 4, uploading 5 to a customer tenant and uploading 6 to the data lake 42. The annotated data may be sent to the IIoT platform 40 and / or uploaded directly to the (specific) customer tenant 41 and / or uploaded to the data lake 42 from where it can be fetched.

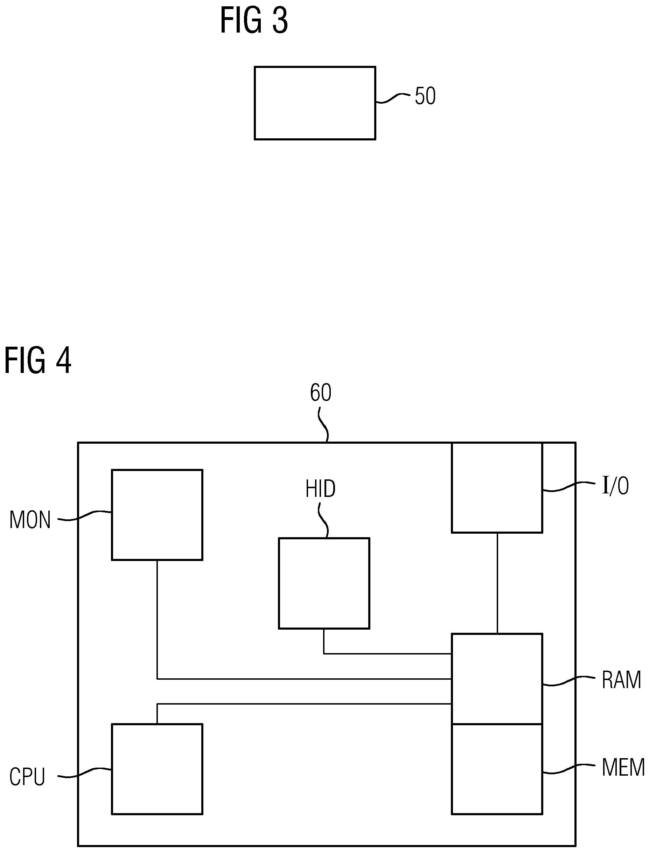

In Fig. 3 the data carrier 50 is schematically depicted. The data carrier 50 stores the engineering tool (20) of Fig. 2 in computer readable form. The data carrier can be permanent or rewritable data carrier like a magnet band, a magnet disc, a CD, a DVD, a blue ray disc, a USB-stick, a flash drive and the like.

In Fig. 4 the computer system 60 is schematically depicted. The computer system 60 executes the computer-implemented method of Fig. 1 and comprises a Central Processing Unit CPU, a Random Access Memory RAM, a Memory MEM, an Input / Output Interface I/O, a Human Interface Device HID and a Monitor MON which are interconnected by a data bus.

The steps of the computer-implemented method are loaded (e.g. from the data carrier 50 via the I/O into the MEM and therefrom) into the RAM and executed by the CPU. The I/O is connected to the sensor 32 monitoring the device 31 of the industrial system 30. The monitoring data is transmitted into the RAM and processed by the CPU according to the computer-implemented method of Fig. 1, wherein the data-expert sees the historical data on the MON and annotates it via the HID. The annotated data may then be sent and / or uploaded to the IIoT 40 and / or the customer tenant 41 and / or the data lake 42 via the I/O.

## Claims

1. Computer-implemented method of annotating monitoring data, comprising the steps:
- collecting (1) values of at least one physical quantity of an industrial system (30) describing a current state of the industrial system (30) as historical data in a debug / online mode of an engineering tool (20);
- annotating (3) the historical data by a domain-expert producing annotated data, wherein labels in natural language are provided as meta-data to the historical data in the debug / online mode of the engineering tool (20).

2. Computer-implemented method according to claim 1, wherein the steps are executed during an engineering phase of the industrial system (30).

3. Computer-implemented method according to any preceding claim, wherein the steps are alternatively or additionally executed during operation of the industrial system (30).

4. Computer-implemented method according to any preceding claim, wherein the values of the at least one physical quantity are collected from a simulation model of the industrial system (30).

5. Computer-implemented method according to any preceding claim, further comprising the step:
- defining (2) portions of interest of the historical data to be annotated in the debug / online mode of the engineering tool (20)
after the step of collecting (1), wherein in the step of annotating (3) only the portions of interest are labelled by the domain-expert.

6. Computer-implemented method according to any preceding claim, further comprising the step:
- sending (4) the annotated data to an Internet of Things, IoT, platform (40) or a cloud system for storage.

7. Computer-implemented method according to claim 6, further comprising the step:
- uploading (5) the annotated data to a configured customer tenant (41) of the IoT platform (40).

8. Computer-implemented method according to claim 6 or 7, further comprising the step:
- uploading (6) anonymized annotated data to a data lake (42) of the IoT platform (40).

9. Computer-implemented method according to any of claims 6 to 8, wherein the IoT platform (40) is an Industrial Internet of Things, IIoT, platform.

10. Engineering tool (20) arranged and configured to implement the steps of the computer-implemented method according to any of claims 1 to 5, comprising:
- a data collecting feature (21) arranged and configured to implement the step of collecting (1) historical data; and
- an annotating feature (22) arranged and configured to implement the step of annotating (3) and optionally to implement the step of defining (2) portions of interest or the collected historical data.

11. Engineering tool (20) according to claim 10 arranged and configured to implement the steps of the computer-implemented method according to any of claims 6 to 9, further comprising:
- a communication feature (23) arranged and configured to implement at least one of the steps of sending (4), uploading (5) to a customer tenant (41) and uploading (6) data to a data lake (42).

12. Engineering tool according to claim 10 or 11, wherein the engineering tool (20) is an engineering tool for programmable logic controllers, PLC.

13. Data carrier (50) arranged and configured to store the engineering tool (20) according to any of claims 10 to 12.

14. Computer system (60) arranged and configured to execute the steps of the computer-implemented method according to claims 1 to 9.
